# EUROPÄISCHE PATENTANMELDUNG

(11) **EP 0 528 263 A2**
(43) Veröffentlichungstag der Anmeldung: **24.02.1993**
(21) Anmeldenummer: 92113304.7
(22) Anmeldetag: 05.08.1992
(51) Int. Cl.: B23B 31/26, B23Q 3/155

(54) **Verfahren und Vorrichtung zum Wechseln von Werkzeugen in Werkzeugmaschinen**

(30) Priorität: 21.08.1991 DE 4127662
(71) Anmelder: SANDVIK AKTIEBOLAG, S-811 81 Sandviken 1 (SE)
(72) Erfinder: Enbergs, Bernhard, W-4270 Dorsten (DE)
(74) Vertreter: Weber, Dieter, Dr.

(57) **Zusammenfassung**

Die vorliegende Erfindung betrifft ein Verfahren zum Wechseln von Werkzeugen an einer Werkzeugmaschine durch Lösen und Spannen des Schaftes eines Werkzeugs in einer Spannvorrichtung der Maschine mit den folgenden Schritten:
I. zum Lösen
   a) Bewegen einer Greifereinrichtung (20) im wesentlichen in radialer Richtung zum eingespannten Werkzeug (40) und Ergreifen desselben außerhalb des eingespannten Bereiches (9a),
   b) Lösen der Spannvorrichtung (30) mit Hilfe eines Betätigungselementes (12),
   c) Herausnehmen des Schaftes (9) aus der Spannvorrichtung (30) durch axiale Auswärtsbewegung (d) der Greifereinrichtung (20),
   d) Transport des Werkzeuges (40) mit Hilfe der Greifereinrichtung (20) zu einem Magazin, Ablegen des Werkzeuges und gegebenenfalls Ergreifen eines neuen Werkzeuges (40) außerhalb des einzuspannenden Bereiches (9a),
II. zum Spannen
   e) Transport des Werkzeuges (40) mit Hilfe der Greifereinrichtung (20) in eine Position axialer Ausrichtung des Schaftes (9) mit einem Schaftaufnahmeteil (1) der Spannvorrichtung (30),
   f) Einschieben des Schaftes (9) in das Schaftaufnahmeteil (1) durch axiale Einwärtsbewegung (a) der Greifereinrichtung (20),
   g) Festspannen des Schaftes (9) in der Spannvorrichtung (30) mit Hilfe des Betätigungselementes (12),
   h) Lösen der Greifereinrichtung (20) von dem Schaft (9) und Wegbewegen der Greifereinrichtung (20) im wesentlichen in radialer Richtung (b) des Schaftes (9),
und eine entsprechende Vorrichtung. Um ein Verfahren und eine entsprechende Vorrichtung zu schaffen, welche sowohl vom programmtechnischen Ablauf als auch vom mechanischen Aufbau her einfacher sind, wird erfindungsgemäß vorgeschlagen, daß die Greifereinrichtung (20) durch ihre Bewegung in den Schritten a) und f) gleichzeitig das Betätigungselement (12) in eine Position verschiebt, in welcher es entweder unmittelbar an einem Spannelement (2) der Spannvorrichtung (30) angreift oder durch eine einfache Schwenk- oder Verschiebebewegung mit diesem in Eingriff bringbar ist.

## Beschreibung

Die vorliegende Erfindung betrifft ein Verfahren zum Wechseln von Werkzeugen an einer Werkzeugmaschine durch Lösen und Spannen des Schaftes eines Werkzeugs in einer Spannvorrichtung der Maschine mit den folgenden Schritten:
I. zum Lösen
   a) Bewegen einer Greifereinrichtung im wesentlichen in radialer Richtung zum eingespannten Werkzeug und Ergreifen desselben außerhalb des eingespannten Bereiches,
   b) Lösen der Spannvorrichtung mit Hilfe eines Betätigungselementes,
   c) Herausnehmen des Schaftes aus der Spannvorrichtung durch axiale Auswärtsbewegung der Greifereinrichtung,
   d) Transport des Werkzeuges mit Hilfe der Greifereinrichtung zu einem Magazin, Ablegen des Werkzeuges und gegebenenfalls Ergreifen eines neuen Werkzeuges außerhalb des einzuspannenden Bereiches,
II. zum Spannen
   e) Transport des Werkzeuges mit Hilfe der Greifereinrichtung in eine Position axialer Ausrichtung des Schaftes mit dem Schaftaufnahmeteil der Spannvorrichtung,
   f) Einschieben des Schaftes in das Schaftaufnahmeteil durch axiale Einwärtsbewegung der Greifereinrichtung,
   g) Festspannen des Schaftes in der Spannvorrichtung mit Hilfe des Betätigungselementes,
   h) Lösen der Greifereinrichtung von dem Schaft und Wegbewegen der Greifereinrichtung im wesentlichen in radialer Richtung des Schaftes.

Ebenso betrifft die vorliegende Erfindung auch eine Vorrichtung zum Wechseln von Werkzeugen an Werkzeugmaschinen, mit einer Greifereinrichtung, welche in radialer Richtung eines eingespannten Werkzeuges bewegbar ist und das Werkzeug außerhalb seines eingespannten Bereiches erfaßt, und mit einem Betätigungselement, welches an einem Spannelement angreift und den Schaft aus der Spannvorrichtung der Maschine löst, wobei die Greifereinrichtung weiterhin in axialer Auswärtsrichtung bewegbar ist, dabei das gelöste Werkzeug mitnimmt, zu einem Magazin bringt, dort ablegt, ein neues Werkzeug ergreift, zu der Spannvorrichtung transportiert, den Schaft des Werkzeuges in eine axial ausgerichtete Position mit einem Schaftaufnahmeteil der Spannvorrichtung bringt und den Schaft in die Spannvorrichtung einführt, woraufhin das Betätigungselement am Spannelement eingreift und durch Betätigung desselben den Schaft festspannt.

Derartige Werkzeugwechselverfahren und -vorrichtungen sind an sich von modernen Werkzeugmaschinen bekannt. Dabei kann die Spannvorrichtung sowohl an einem stehenden als auch an einem drehenden Maschinenteil vorgesehen sein. Die Spannvorrichtung hat dazu im allgemeinen einen Hohlraum, welcher den Schaft eines Werkzeuges passend aufnehmen kann, wobei das Zentrum dieses Hohlraumes durch eine Achse definiert ist, ohne daß der Schaft und der den Schaft passend aufnehmende Hohlraum notwendigerweise rotationssymmetrisch sein müssen. Das Zentrum des Schaftes ist ebenfalls durch eine Achse definiert. Als Werkzeug im Sinne der vorliegenden Anmeldung werden im übrigen auch Werkzeughalter oder sonstige modulare Zwischenelemente angesehen, die zwar für sich von dem eigentlichen Bearbeitungswerkzeug gelöst werden können, im Betrieb aber mit einem Bearbeitungswerkzeug fest verbunden sind und z.B. als Adapter oder Verlängerung oder allgemein als Werkzeughalter dienen und mit einem entsprechenden Schaft in der Spannvorrichtung festgespannt werden.

Moderne Werkzeugmaschinen sind hochkomplizierte Bearbeitungsstationen, mit denen es möglich ist, entsprechend einem programmierten Bewegungsablauf eine Reihe sehr unterschiedlicher Bearbeitungsvorgänge an einem Werkstück durchzuführen, die mit einem einzelnen Werkzeug nicht durchführbar sind, so daß zwischen den einzelnen Bearbeitungsvorgängen Werkzeugwechsel stattfinden müssen. Dies geschieht in entsprechenden Maschinen ebenfalls automatisch durch die oben in ihren Grundzügen beschriebene Werkzeugwechselvorrichtung und nach einem entsprechenden Verfahren.

Allerdings erfordern die bisher bekannten Verfahren und Vorrichtungen zum Wechseln von Werkzeugen an Werkzeugmaschinen oftmals einen beträchtlichen maschinellen und auch programmtechnischen Aufwand, weil zum einen die Greifereinrichtung zum Einsetzen und Herausnehmen des Werkzeuges in die bzw. aus der Spannvorrichtung und dem Ablegen im bzw. Herausnehmen aus dem Magazin eine bestimmte Abfolge von Bewegungen durchführen muß, während das Betätigungselement für die Spannvorrichtung ebenfalls in und außer Eingriff mit einem Spannelement gebracht werden muß, wofür generell ein separater Vorschub und Betätigungsapparat für das Betätigungselement vorgesehen ist, der auch koordiniert mit der Bewegung der Greifereinrichtung gesteuert werden muß. Hinsichtlich dieser Anforderungen kommen derartige Werkzeugmaschinen sogenannten Industrierobotern sehr nahe oder werden auch als solche bezeichnet. Dabei ergibt sich weiterhin die Schwierigkeit, daß das Betätigungselement oft nur in einer bestimmten Position des Werkzeuges und/oder der Spannvorrichtung (sofern letztere drehbar ist) an einem entsprechenden Spannelement angreifen können, so daß es beispielsweise erforderlich ist, Maßnahmen zu treffen, um die Welle für die Spannvorrichtung immer in einer fest definierten Position zu stoppen und auch den Werkzeugschaft immer nur in einer fest definierten Position relativ zum Betätigungselement in die Spannvorrichtung einzubringen. Die hierfür vorzusehenden mechanischen Elemente ebenso wie auch etwaige Programmteile in dem Programm, welches den Werkzeugwechselvorgang steuert, sind entsprechend aufwendig und teuer.

Der Erfindung liegt daher die Aufgabe zugrunde, ein Verfahren und eine Vorrichtung der eingangs genannten Art zu schaffen, welche sowohl vom programmtechnischen Ablauf als auch vom mechanischen Aufbau her einfacher sind.

Hinsichtlich des eingangs genannten Verfahrens wird diese Aufgabe dadurch gelöst, daß die Greifereinrichtung durch ihre Bewegung in den Schritten a) und f) gleichzeitig das Betätigungselement in eine Position verschiebt, in welcher es entweder unmittelbar an einem Spannelement der Spannvorrichtung angreift oder durch eine einfache Schwenk-oder Verschiebebewegung mit diesem in Eingriff bringbar ist.

Hinsichtlich der Vorrichtung wird die der Erfindung zugrundeliegende Aufgabe dadurch gelöst, daß das Betätigungselement an der Greifereinrichtung angeordnet ist, und zwar derart daß es, wenn die Greifereinrichtung das Werkzeug in der in die Spannvorrichtung eingeschobenen, gelösten oder festgespannten Stellung hält, in einer Position ist, in der es entweder in direktem Eingriff mit dem Spannelement steht oder unmittelbar vor diesem angeordnet ist, so daß es durch eine einfache Schwenk- oder Vorschubbewegung mit dem Spannelement in Eingriff bringbar ist.

Erfindungsgemäß ist also die Bewegung des Betätigungselementes direkt (d.h. mechanisch) mit der Bewegung der Greifereinrichtung gekoppelt und das Betätigungselement ist an der Greifereinrichtung angeordnet. Es ist also nicht notwendig, daß ein Steuerungsapparat für das Betätigungselement in Abhängigkeit von der von der Greifereinrichtung eingenommenen Position die Vorschubbewegung des Betätigungselementes und dessen Antrieb steuern und dazu die Bewegung der Greifereinrichtung erfassen muß. Vielmehr übernimmt es die Greifereinrichtung selbst, das Betätigungselement genau in dem Moment auf ein entsprechendes Spannelement der Spannvorrichtung zuzubewegen, in dem es den Schaft spannen oder lösen soll. Bevorzugt ist dabei selbstverständlich, daß das Betätigungselement durch die Bewegung der Greifereinrichtung direkt in Eingriff mit einem entsprechenden Spannelement gebracht wird, welches an der Spannvorrichtung angeordnet ist, gegebenenfalls kann jedoch auch noch eine zusätzliche Schwenk- oder Vorschubbewegung erforderlich sein, um den endgültigen Eingriff des Betätigungselementes mit dem Spannelement sicherzustellen. Dabei kann in sehr einfacher Weise auch direkt bei Erreichen der Eingriffsposition der Antrieb für das Betätigungselement eingeschaltet werden, so daß das Spannelement in die gewünschte Richtung zum Spannen oder Lösen des Schaftes von dem Betätigungselement bewegt wird. In der einfachsten Version können die entsprechenden Bewegungen bzw. Antriebe allein durch Schalter, z.B. Berührungsschalter, ausgelöst werden, die durch die Bewegung der Greifereinrichtung selbst betätigt werden.

Dabei ist eine Ausgestaltung des Verfahrens bevorzugt, bei welcher die Greifereinrichtung das Werkzeug während des Spann- oder Lösevorganges drehfest hält.

Das Betätigungselement kann nämlich je nach Anordnung des Spannelementes unter Umständen ein Drehmoment auf die Spannvorrichtung und damit auch auf den Schaft des Werkzeuges übertragen, so daß das drehfeste Halten des Werkzeuges durch die Greifereinrichtung die erforderliche Gegenkraft aufbringt. Anderenfalls müßte entsprechend bekannten Vorrichtungen eine wiederum aufwendige Einrichtung zum Fixieren der Spannvorrichtung vorgesehen werden. Es versteht sich, daß die drehfeste Halterung nicht erforderlich ist, wenn die Spannvorrichtung ohnehin an einem stehenden Maschinenteil angeordnet ist. Bei vielen Werkzeugmaschinen findet der Wechsel jedoch auch an unterschiedliche Spannvorrichtungen statt, die teils fest teils drehbar sind, so daß die drehfeste Halterung des Werkzeuges durch die Greifereinrichtung auf jeden Fall zweckmäßig ist.

Außerdem ist ein Verfahren für den Werkzeugwechsel bevorzugt, bei welchem die Drehposition des jeweiligen Werkzeuges bezüglich seiner Achse und/oder der Spannvorrichtung bezüglich ihrer Achse erfaßt wird. Auf diese Weise kann man einen bezüglich der Drehposition festgelegten Eingriff der Greifereinrichtung ebenso wie auch des Betätigungselementes in der gewünschten Weise festlegen. Als besonders zweckmäßig hat sich in diesem Zusammenhang eine Ausgestaltung des Verfahrens erwiesen, bei welchem vor dem Lösen des Werkzeuges aus einer drehbaren Spannvorrichtung die Greiferelemente der Greifereinrichtung, auch wenn diese bereits ihre Position am Werkzeug erreicht hat, in welcher auch das Betätigungselement mit dem Spannelement in Eingriff steht, zunächst noch außer Eingriff bleiben und die gesamte Spannvorrichtung durch den Antrieb des Betätigungselementes und dessen Eingriff an einem Spannelement gedreht wird, bis eine gewünschte Drehposition erreicht ist, woraufhin die Greiferelemente an dem Werkzeug angreifen und dieses drehfest halten. Der weitere Antrieb des Betätigungselementes bewirkt dann keine Drehung der Spannvorrichtung mehr, da diese in dem eingespannten Zustand des Werkzeuges fest mit der Spannvorrichtung verbunden ist, sondern lediglich das Lösen des Spannelementes, so daß schließlich der Schaft des Werkzeuges aus der Spannvorrichtung herausgenommen werden kann.

Wie bereits erwähnt, ist bei der erfindungsgemäßen Vorrichtung eine ortsfeste Anordnung des Betätigungselementes an der Greifereinrichtung bevorzugt, so daß also beim Heranfahren der Greifereinrichtung an die Spannvorrichtung, d.h. also entweder beim Einführen des Werkzeugschaftes in das Schaftaufnahmeteil oder aber beim Heranfahren an das eingespannte Werkzeug, das Betätigungselement unmittelbar in Eingriff mit einem entsprechenden Spannelement gebracht wird. Zweckmäßigerweise hat dabei das Betätigungselement ein auf einer geschlossenen Bahn umlaufendes Teil und ist vorzugsweise ein Ritzel. Es versteht sich, daß anstelle eines Ritzels auch ein umlaufender Zahnriemen, eine Kette oder dergleichen als Betätigungselement verwendet werden könnten.

Die Spannvorrichtung, die selbst nicht Gegenstand der vorliegenden Anmeldung ist, hat dementsprechend ein Spannelement mit einer Verzahnung, in welche ein solches Ritzel (gegebenenfalls auch eine Kette oder ein Zahnriemen) eingreifen kann. Am einfachsten ist der Eingriff zwischen einem solchen Ritzel und dem Spannelement zu bewerkstelligen, wenn dieses in Form einer Überwurfmutter an einer Spannvorrichtung angeordnet ist. Das Spannelement könnte jedoch auch als eine in axialer Richtung vorstehende Schraube mit einer Verzahnung für den Eingriff mit dem Ritzel ausgestaltet sein oder könnte über einen außen an der Spannvorrichtung angeordneten Zahnkranz oder dergleichen betätigt werden. Denkbar wäre es auch, das Betätigungselement über einen Kniehebel oder dergleichen an der Greifereinrichtung zu befestigen, wobei der Kniehebel während der Bewegung der Greifereinrichtung zwangsweise verschwenkt wird, um das Betätigungselement in eine entsprechende seitliche Öffnung der Spannvorrichtung eintreten oder wieder herauskommen zu lassen, hinter welcher sich das Spannelement befindet.

Besonders bevorzugt ist eine Ausführungsform der Erfindung, bei welcher die Ritzelachse in der Eingriffsposition mit dem Spannelement parallel zur Achse der Spannvorrichtung ausgerichtet ist. Dies ermöglicht eine platzsparende und gleichzeitig konstruktiv einfache Anordnung des Betätigungselementes an der Greifereinrichtung.

Schließlich ist bei der bevorzugten Ausführungsform der Erfindung eine Erfassungseinrichtung für die Drehposition des Werkzeuges und/oder der Spannvorrichtung vorgesehen.

Eine solche Erfassungseinrichtung kann beispielsweise ein an der Greifereinrichtung angeordnetes Halbleiterleseelement sein. Die entsprechenden Halbleiterchips, welche die Informationen über die Drehposition enthalten, können dann am Werkzeug bzw. Werkzeugschaft und/oder an der Spannvorrichtung bzw. dem Schaftaufnahmeteil der Spannvorrichtung so angeordnet sein, daß sie von der Leseeinrichtung am Greiferelement abgelesen werden können. Die Leseeinrichtung kann auch auf optischer Basis arbeiten, z.B. als Kombination von lichtempfindlicher Diode und von einem der Elemente ausgehenden Lichtstrahlen, gegebenenfalls auch über Spiegel umgelenkt. Ebenso können auch Strichcodes am Werkzeug und/oder der Spannvorrichtung vorgesehen sein. In der einfachsten Form kann eine Erfassungseinrichtung für die Drehposition auch rein mechanisch arbeiten, z.B. in Form eines federnd gelagerten und mit einem Schalter verbundenen Stiftes, welcher in eine entlang des Umfanges der Spannvorrichtung oder des Werkzeuges vorgesehene Vertiefung eingreift, wenn die entsprechende Position erreicht ist. Anstelle der Vertiefung kann selbstverständlich auch ein den Stift wegdrückender Vorsprung vorgesehen sein.

Schließlich ist eine Ausführungsform der Erfindung bevorzugt, bei welcher die Greifereinrichtung Greiferelemente aufweist, welche unabhängig von der Bewegung der Greifereinrichtung betätigbar sein und das Werkzeug während des Spann- und Lösevorganges drehfest halten können.

Im Zusammenhang mit dem bevorzugten Verfahren zum Werkzeugwechseln war bereits erwähnt worden, daß derartige Greiferelemente die erforderliche Gegenkraft beim Betätigen des Spannelementes aufbringen und wahlweise zunächst auch außer Eingriff bleiben können.

Schließlich ist eine Ausgestaltung der erfindungsgemäßen Werkzeugwechselvorrichtung bevorzugt, bei welcher die Greifereinrichtung entlang eines L-förmigen Weges bewegbar ist, wobei die Winkelspitze des "L" die Position an der Spannvorrichtung definiert, in welcher die Greifereinrichtung sich am Werkzeug befindet und dieses beispielsweise im eingespannten Zustand hält, während der eine der beiden L-Schenkel in axialer Richtung der Spannvorrichtung und der andere in radialer Richtung der Spannvorrichtung weist.

Die axiale Bewegungsrichtung ist notwendig, um den Schaft in ein entsprechendes Schaftaufnahmeteil einführen und herausnehmen zu können.

Die Bewegung der Greifereinrichtung in radialer Richtung ist insofern zweckmäßig, als sowohl die Spannvorrichtung mit dem anschließenden Maschinenteil als auch das Werkzeug selbst in radialer Richtung relativ ausladend sein können, so daß ein Wegbewegen der Greifereinrichtung in axialer Richtung nur schwierig möglich wäre. Auch das Werkstück, welches in die Nähe des Werkzeuges gebracht wird, könnte mit der Greifereinrichtung in Konflikt kommen, wenn diese nicht weit genug von der Spannvorrichtung bzw. von dem Werkzeug entfernt wäre, wobei in zumindest einer radialen Richtung genügend Platz vorhanden sein sollte, um die Greifereinrichtung außerhalb des Einflußbereiches der sonstigen beweglichen Teile zu bringen.

Der weitere Bewegungsweg der Greifereinrichtung zum Ablegen eines aus der Spannvorrichtung herausgenommenen und zum Heranbringen eines neuen Werkzeuges ist weitgehend beliebig, ertolgt in konventioneller Weise und braucht hier nicht näher beschrieben zu werden.

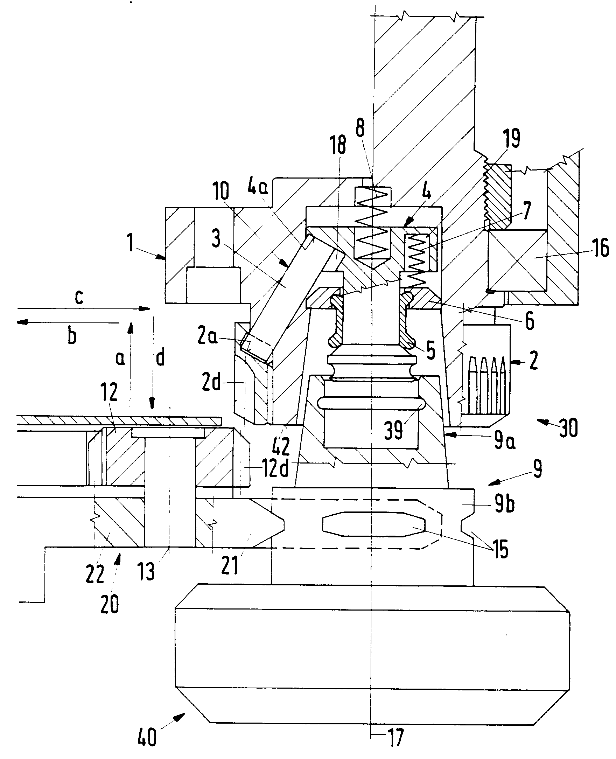

Die Erfindung wird im folgenden anhand einer bevorzugten Ausführungsform im Zusammenhang mit der einzigen Figur beschrieben.

Man erkennt in der Zeichnung eine Spannvorrichtung 30 mit einem Schaftaufnahmeteil 1, welches in der linken Bildhälfte als an einem stehenden Maschinenteil montierbar dargestellt ist, während auf der rechten Seite ein Lager 16 erkennbar ist, welches die drehbare Lagerung des Schaftaufnahmeteiles 1 andeutet, welches gegebenenfalls auch einstückig mit einer oben rechts angedeuteten Welle ausgebildet sein kann. Das Schaftaufnahmeteil hat einen sich axial einwärts verjüngenden Hohlraum zur Aufnahme eines passend geformten Schaftteiles 9a des Schaftes 9 eines Werkzeuges 40. Das Werkzeug 40 ist lediglich angedeutet und kann auch lediglich ein Werkzeughalter sein, an dem ein (nicht dargestelltes) Beabeitungswerkzeug (z. B. Fräsmesser, Hartmetallschneidplatten zum Bohren etc) befestigt ist. Wesentlich ist lediglich, daß dieses Werkzeug einen Schaft 9 hat, der in dem Schaftaufnahmeteil 1 der Spannvorrichtung 30 aufnehmbar und festspannbar ist und daß das Werkzeug bzw. ein außerhalb der Spannvorrichtung 2 verbleibender Teil 9b des Schaftes 9 von einer Greifereinrichtung 20 erfaßt werden kann. Die Greifereinrichtung 20 ist in der linken Bildmitte lediglich schematisch angedeutet. Sie besteht im wesentlichen aus einer beweglich angeordneten Gabel, von der jedoch nur ein Gabelarm 22 dargestellt ist. An diesem Gabelarm 22 sind wiederum bewegliche Greiferelemente 21 angeordnet, welche in am Schaftteil 9b vorgesehene Kerben 15 passend eingreifen können. Zweckmäßigerweise sind an der Gabel mindestens zwei gegenüberliegende Greiferelemente 21 vorgesehen, wobei die Gabel so bemessen ist, daß sie zunächst das Schaftteil 9b im Abstand umgreift, wobei auch der lichte Abstand zwischen den gegenüberliegenden Greiferelementen 21 größer ist als der Außendurchmesser des Schaftteiles 9b und wobei anschließend die Greiferelemente 21 so betätigt werden, daß sie sich (bezüglich des Schaftes 9) radial einwärts bewegen und dabei in gegenüberliegende Kerben 15 eingreifen.

Es versteht sich, daß auch eine Vielzahl verschiedener anderer Greiferelemente und Schaftgestaltungen denkbar ist, die ein Ergreifen des Schaftteiles 9b erlauben. Bei der dargestellten Ausführungsform sind in gleichmäßigen Umfangsabständen vier Kerben 15 angeordnet, wobei der Eingriff der Greiferelemente 21 automatisch die Drehposition des Werkzeuges festlegt. Da das Werkzeug 40 immer in derselben Drehposition im Magazin abgelegt wird und dort auch nicht gedreht wird, ändert es relativ zu den Greiferelementen 21 seine Position während des gesamten Werkzeugwechselvorganges nicht.

Die Spannvorrichtung 30 enthält neben dem Schaftaufnahmeteil 1 im wesentlichen eine Überwurfmutter 2, die auf ein Außengewinde des Vorderendes des Schaftaufnahmeteils 1 aufgeschraubt ist. Diese Überwurfmutter 2 hat oberhalb ihres Gewindes eine konische Innenfläche 2a, auf welcher drei über den Umfang verteilte Stifte 3 mit einem Ende aufliegen, welche sich durch Bohrungen 10 in dem Schaftaufnahmeteil 1 nach innen erstrecken. Das andere Ende der Stifte 3 liegt dort an passend gestalteten Schrägflächen 4a in Ausnehmungen 18 an einem Zugelement 4 an, welches so durch Drehen der Überwurfmutter 2 und über den Eingriff der Stifte 3 in axialer Richtung verschiebbar ist. Dabei ist das Zugelement 4 durch eine Feder 8 in axialer Richtung nach außen vorgespannt.

Die Bewegung der Greifereinrichtung 20 ist durch die Pfeile a, b, c und d schematisch angedeutet, wobei die Bewegung a der axialen Einwärtsbewegung des Schaftes 9 in das Schaftaufnahmeteil 1 und die Bewegungsrichtung d der axialen Auswärtsbewegung hieraus entspricht. Zum Spannen wird also das Schaftteil 9a durch die Greifereinrichtung 20, deren Greiferelemente 21 in die Kerben 15 des Schaftteiles 9b eingreifen, in der Richtung a eingeführt. Das Schaftteil 9a ist seinerseits als Hohlteil ausgebildet, so daß der untere Abschnitt des Zugelementes 4 in das hohle Schaftteil 9a eintreten kann. Die unteren verdickten Köpfe von Spannfingern 5 liegen dabei in etwa in Höhe einer Nut 39, die auf der Innenseite des hohlen Schaftteiles 9a umläuft.

Durch Drehen der Überwurfmutter 2 in Spannrichtung wird nun über die Stifte 3 das Zugelement 4 axial einwärts bewegt, wobei sich auch der untere Abschnitt desselben mit der konischen Fläche unterhalb der Spannfinger 5 in axialer Einwärtsrichtung bewegt. Die Spannfinger 5 sind ihrerseits über Federn 7, die sich im Hohlraum 19 abstützen, gegen das Zugelement 4 vorgespannt an einem Haltering 6 gelagert, so daß sie durch die axiale Einwärtsbewegung des Zugelementes 5 auf der konischen Fläche nach außen gespreizt werden, in die Nut 39 eingreifen und dann, wenn sie im festen Eingriff sind, von dem Zugelement 4 in axialer Richtung mitgenommen werden, wobei entsprechend auch das Schaftteil 9a und das gesamte Werkzeug 40 in axialer Einwärtsrichtung mitgenommen werden. Die Außenfläche des Schaftteiles 9a legt sich dabei fest an die Innenfläche des Hohlraumes im Schaftaufnahmeteil 1 an. In der endgültig festgespannten Position liegt die am Übergang vom Schaftteil 9a zum Schaftteil 9b gebildete radiale Fläche fest an der Stirnfläche 42 des Schaftaufnahmeteiles 1 an, so daß die Position des Werkzeuges exakt definiert ist. In der bevorzugten Ausführungsform einer solchen Spannvorrichtung hat das Schaftteil 9a und hat auch der entsprechende Aufnahmeraum des Schaftaufnahmeteils 1 einen polygonalen, vorzugsweise dreieckigen, Querschnitt mit abgerundeten Ecken und konvexen Seitenflächen.

Weitere Einzelheiten der vorstehend beschriebenen Spanneinrichtung sind einer gleichzeitig mit der vorliegenden Anmeldung für denselben Anmelder eingereichten Patentanmeldung mit dem Titel "Mechanische Spannvorrichtung" zu entnehmen, deren Inhalt hier durch diese Bezugnahme ausdrücklich in die vorliegende Anmeldung mit aufgenommen wird.

Das Wesen der vorliegenden Erfindung wird in dem dargestellten Ausführungsbeispiel konkretisiert in Form der relativen Anordnung des Ritzels 12 an der Greifereinrichtung 20, wobei das Ritzel 12 an der Greiferanordnung 20 um die Achse 13 drehbar gelagert ist und die Achse 13 in der dargestellten Position der axialen Ausrichtung des Schaftes 9 mit der Spannvotrichtung 30 parallel zu deren gemeinsamer Achse 17 verläuft. Nicht näher dargestellt ist der Antrieb für das Ritzel 12, welcher in herkömmlicher Weise über weitere Zahnräder oder dergleichen erfolgen kann.

Die Überwurfmutter 2 weist für den Eingriff mit der Verzahnung 12d des Ritzels 12 seinerseits eine Außenverzahnung 2d auf. Die Verzahnungen 2d und 12d sind außerdem stirnseitig schräg angeschnitten, was den Eingriff der Verzahnungen ineinander bei der axialen Einschubbewegung in Richtung des Pfeiles a beträchtlich erleichtert und auch dann ermöglicht, wenn die Verzahnungen 2d, 12d nicht in der passenden Drehposition zueinander ausgerichtet sind. Erforderlichenfalls können auch Führungshilfen auf diesen Schrägflächen vorgesehen werden, die ein Ineinanderrutschen der Verzahnungen 2d, 12d bei deren Relatrivbewegung in der axialen Richtung a sicherstellen.

Wie man erkennt, fluchten auf jeden Fall die beiden Verzahnungen 2d, 12d in der axialen Ausrichtung des Werkzeuges 40 mit der Spannvorrichtung 30 so miteinander, daß sie bei der reinen Axialbewegung a in Eingriff miteinander kommen. Das Ritzel 12 kann in diesem Zustand leicht drehbar sein. Die Bewegung der Greifereinrichtung 20 wird gestoppt, sobald die Außenfläche des Schaftteiles 9a an der entsprechend geformten Innenfläche des Schaftaufnahmeteils 1 zur Anlage kommt, ohne daß das Schaftteil 9a schon seine endgültig festgespannte Position dabei eingenommen hat. Diese wird vielmehr erst erreicht durch das anschließende Drehen des Ritzels 12, z.B. mit Hilfe eines elektrischen oder pneumatischen Motors, welches über den Eingriff der Verzahnungen 12d, 2d seinerseits die Überwurfmutter 2 in Spannrichtung dreht, so daß in der bereits beschriebenen Weise das Zugelement 4 axial einwärts bewegt wird, wobei die Finger 5 in Eingriff mit der Nut 39 gelangen und den Schaftteil 9a fest in das Schaftaufnahmeteil hineinziehen, bis die sich radial erstreckende Absatzfläche zwischen den Teilen 9a und 9b an der Fläche 42 zur Anlage kommt. Dabei halten die Greiferelemente 21 das Werkzeug 40 drehfest in der Greifereinrichtung 20 und wirken so dem auf die Mutter 2 über das Ritzel 12 ausgeübten Drehmoment entgegen. Die Welle, an der die Spannvorrichtung angeordnet ist, braucht also nicht gegen eine Drehung fixiert zu werden.

Anschließend werden die Greiferelemente 21 gelöst und die gesamte Greifereinrichtung 20 mit dem Ritzel 12 wird in der radialen Richtung b von der Spannvorrichtung 30 und dem Werkzeug 40 wegbewegt. Es versteht sich, daß im Hinblick auf die Anordnung der Greiferelemente 21 bzw. der Gabelklauen 22 die Richtung b nicht notwendigerweise in der Zeichenebene liegen muß, sondern auch senkrecht hierzu verlaufen kann oder daß umgekehrt die gegenüberliegenden Greiferelemente 21 in die Kerben 15 eingreifen können, die bei einem räumlich gedachten Werkzeug vor bzw. hinter der Zeichenebene liegen würden.

Zum Lösen und Herausnehmen des Werkzeuges 40 wird die Greifereinrichtung in Richtung des Pfeiles b auf die Spannvorrichtung und das Werkzeug 40 zubewegt, wobei die Verzahnungen 2d, 12d in gleicher axialer Höhe liegen, also unmittelbar in Eingriff miteinander gebracht werden, sobald die Greifereinrichtung 20 die Spannvorrichtung bzw. das Werkzeug 40 oder das Schaftteil 9b erreicht hat. Bei einer drehbar gelagerten Spannvorrichtung, deren Drehposition nach einem voraufgegangenen Bearbeitungsvorgang nicht eindeutig definiert ist, ist es dabei zweckmäßig, wenn an der Greifereinrichtung eine Erfassungseinrichtung für die Drehposition der Spannvorrichtung 30 vorgesehen ist, die z.B. aus einer Halbleiterleseeinrichtung besteht. Ein entsprechender Halbleiterchip, der die gewünschten Informationen über die Drehposition enthält, kann dabei vorzugsweise an einem stehenden Maschinenteil, gegebenenfalls jedoch auch an einem rotierenden Maschinenteil angeordnet sein. Befinden sich dann die Spannvorrichtung 30 und das Werkzeug 40 nicht in der gewünschten Drehposition, so bleiben die Greiferelemente 21 zunächst noch außer Eingriff mit den Kerben 15 und es wird über das Ritzel 12 die Überwurfmutter 2 gedreht und zwar entweder in Löse-oder in Spannrichtung. Wegen des festgespannten Zustandes der Anordnung wird dabei die Überwurfmutter 2 auch dann nicht gedreht, wenn sie in Löserichtung bewegt wird, sondern nimmt vielmehr die gesamte Spannvorrichtung in der entsprechenden Drehrichtung mit, bis die gewünschte Position erreicht ist. In dieser Position greifen die Greiferelemente 21 in die Kerben 15 ein und halten somit den Werkzeugschaft 9 und über diesen auch das Schaftaufnahmeteil 1 der Spannvorrichtung 30 gegen das auf die Mutter 2 ausgeübte Drehmoment fest. Das Ritzel 12 wird nun in Löserichtung bewegt, erforderlichenfalls muß hierzu die vorherige Drehrichtung des Ritzels 12 umgekehrt werden. Die Mutter 2 bewegt sich dann durch Drehung auf dem entsprechenden Außengewinde des Schaftaufnahmeteils 1 in axialer Richtung nach außen, wobei ihre (nicht gezahnte) Stirnseite mit dem äußeren Rand der Radialfläche am Übergang des Schaftteiles 9a zum Schaftteil 9b in Eingriff tritt und damit das in dem Schaftaufnahmeteil 1 festgespannte Schaftteil 9a löst. Die Greifereinrichtung 20 kann sich dann in der durch den Pfeil d angedeuteten axialen Auswärtsrichtung bewegen und nimmt dabei das Werkzeug 40 mit, wobei auch das Ritzel 12 bzw. dessen Verzahnung 12d außer Eingriff mit der Mutter 2a bzw. deren Verzahnung 2d tritt.

Das Werkzeug 40 wird dann in herkömmlicher Weise von der Greifereinrichtung zu einem Magazin gebracht, dort abgelegt und es wird gegebenenfalls ein neues Werkzeug 40 von der Greifereinrichtung 20 ergriffen und wieder in die in der Figur dargestellte Position gebracht und in Richtung des Pfeiles a in die Spannvorrichtung 30 eingeführt.

Die erfindungsgemäße Werkzeugwechselvorrichtung kann auch ohne Werkzeug dazu benutzt werden, über das Ritzel 12 und die Mutter 2 eine gewünschte Drehposition der drehbar gedachten Spannvorrichtung 30 einzustellen. Dies ist auch deshalb möglich, weil die axiale Verschiebung der Überwurfmutter in beiden Richtungen begrenzt ist, nämlich in axialer Einwärtsrichtung durch eine über den Gewindedurchmesser hinausgehende Erweiterung des Schaftaufnahmeteiles 1 und in der anderen Richtung durch eine senkrecht zur Fläche 2a verlaufende konische Innenfläche, die sich auf die Außenseite der Stifte 3 auflegt und ein weiteres Auswärtsdrehen der Mutter verhindert. In diesen Endstellungen führt eine weitere Drehung der Mutter 2 in der blockierten (Löse-)Richtung mit Hilfe des Ritzels 12 zu einer Drehung der gesamten Spannvorrichtung 30.

Die erfindungsgemäße Greifereinrichtung ist in ihrer Konstruktion und auch in ihrem Betrieb einfacher als die meisten anderen bekannten Werkzeugwechselvorrichtungen, wobei die Vorzüge dieser Erfindung vor allem in Verbindung mit einer passenden Spannvorrichtung deutlich werden, wie sie in der Figur in Form der Überwurfmutter 2 und der zugehörigen Teile dargestellt ist. Wie bereits erwähnt, sind jedoch auch andere Spannkonstruktionen, die nicht mit einer Überwurfmutter arbeiten, in Verbindung mit der vorliegenden Erfindung denkbar. Ein besonderer Vorteil der Erfindung Iiegt auch darin, daß die Greifereinrichtung selbst bei einer Drehung des Spannelementes das erforderliche Gegenmoment aufbringt, so daß für die Welle einer drehbar gelagerten Spannvorrichtung keine Blockiereinrichtungen oder dergleichen vorgesehen werden müssen.

### Bezugszeichenliste

- 1: Schaftaufnahmeteil
- 2: Überwurfmutter, Spannvorrichtung
- 2a: Mutter, Fläche
- 2a: Innenfläche
- 2d, 12d: Verzahnung
- 3: Stifte
- 4: Zugelement
- 4a: Schrägflächen
- 5: Spannfinger, Zugelement
- 6: Haltering
- 7: Feder
- 8: Feder
- 9: Schaft
- 9a: Schaftteil
- 9b: Schaftteil
- 10: Bohrungen
- 12: Ritzel
- 13: Achse
- 15: Kerben
- 16: Lager
- 17: Achse
- 18: Ausnehmungen
- 19: Hohlraum
- 20: Greifereinrichtung
- 21: Greiferelemente
- 22: Gabelarm, Gabelklauen
- 30: Spannvorrichtung
- 39: Nut
- 40: Werkzeug
- 42: Stirnfläche
- a, b, c, d: Pfeile

## Patentansprüche

1. Verfahren zum Wechseln von Werkzeugen an einer Werkzeugmaschine durch Lösen und Spannen des Schaftes eines Werkzeugs in einer Spannvorrichtung der Maschine mit den folgenden Schritten:
I. zum Lösen
a) Bewegen einer Greifereinrichtung (20) im wesentlichen in radialer Richtung zum eingespannten Werkzeug (40) und Ergreifen desselben außerhalb des eingespannten Bereiches (9a),
b) Lösen der Spannvorrichtung (30) mit Hilfe eines Betätigungselementes (12),
c) Herausnehmen des Schaftes (9) aus der Spannvorrichtung (30) durch axiale Auswärtsbewegung (d) der Greifereinrichtung (20),
d) Transport des Werkzeuges (40) mit Hilfe der Greifereinrichtung (20) zu einem Magazin, Ablegen des Werkzeuges und gegebenenfalls Ergreifen eines neuen Werkzeuges (40) außerhalb des einzuspannenden Bereiches (9a),
II. zum Spannen
e) Transport des Werkzeuges (40) mit Hilfe der Greifereinrichtung (20) in eine Position axialer Ausrichtung des Schaftes (9) mit einem Schaftaufnahmeteil (1) der Spannvorrichtung (30),
f) Einschieben des Schaftes (9) in das Schaftaufnahmeteil (1) durch axiale Einwärtsbewegung (a) der Greifereinrichtung (20),
g) Festspannen des Schaftes (9) in der Spannvorrichtung (30) mit Hilfe des Betätigungselementes (12),
h) Lösen der Greifereinrichtung (20) von dem Schaft (9) und Wegbewegen der Greifereinrichtung (20) im wesentlichen in radialer Richtung (b) des Schaftes (9),
dadurch gekennzeichnet, daß die Greifereinrichtung (20) durch ihre Bewegung in den Schritten a) und f) gleichzeitig das Betätigungselement (12) in eine Position verschiebt, in welcher es entweder unmittelbar an einem Spannelement (2) der Spannvorrichtung (30) angreift oder durch eine einfache Schwenk- oder Verschiebebewegung mit diesem in Eingriff bringbar ist.

2. Verfahren nach Anspruch 1, dadurch gekennzeichnet, daß die Greifereinrichtung (30) während des Spann- oder Lösevorganges das Werkzeug (40) drehfest hält.

3. Verfahren nach Anspruch 1 oder 2, bei welchem die Spannvorrichtung drehbar montiert ist, dadurch gekennzeichnet, daß vor dem Spannen oder Lösen die Drehposition der Spannvorrichtung bezüglich ihrer Achse (17) erfaßt wird.

4. Verfahren nach Anspruch 3, dadurch gekennzeichnet, daß vor dem Lösen eines Werkzeuges (40) und nachdem die Greifereinrichtung (20) und das Betätigungselement (12) in Eingriffsposition gebracht worden sind, die den Schaft (9) erfassenden Greiferelemente (21) zunächst außer Eingriffbleiben, während das Betätigungselement (12) an dem Spannelement (2) angreift und durch seine Bewegung die Spannvorrichtung (30) mit dem Werkzeug (40) dreht, bis eine gewünschte Drehposition erreicht ist, in welcher die Greiferelemente (21) in Eingriff gebracht werden, um das Werkzeug (40) drehfest zu halten, wobei die weitere Bewegung des Betätigungselementes (12) das Spannelement (2) relativ zum Werkzeug (40) und zur Spannvorrichtung (30) bewegt und damit den Schaft (9) des Werkzeuges (40) löst.

5. Vorrichtung zum Wechseln von Werkzeugen (40) an Werkzeugmaschinen, mit einer Greifereinrichtung (20), welche in radialer Richtung (c) eines eingespannten Werkzeuges (40) bewegbar ist, um das Werkzeug (40) außerhalb seines eingespannten Bereiches (9a) zu erfassen, und mit einem Betätigungselement (12), welches an einem Spannelement (2) angreift und den Schaft (9) aus der Spannvorrichtung der Maschine löst, wobei die Greifereinrichtung (20) weiterhin in axialer Auswärtsrichtung (d) bewegbar ist, dabei das gelöste Werkzeug mitnimmt, zu einem Magazin bringt, dort ablegt, ein neues Werkzeug (40) ergreift, zu der Spannvorrichtung (30) transportiert, den Schaft (9) des Werkzeuges (40) in eine axial ausgerichtete Position mit einem Schaftaufnahmeteil (1) der Spannvorrichtung (30) bringt und den Schaft (9) in die Spannvorrichtung (30) einführt, woraufhin das Betätigungselement (12) am Spannelement (2) eingreift und durch Betätigung desselben den Schaft (9) festspannt, dadurch gekennzeichnet, daß das Betätigungselement (12) an der Greifereinrichtung (20) derart angeordnet ist, daß es, wenn die Greifereinrichtung (20) das Werkzeug (40) in der in die Spannvorrichtung (30) eingeschobenen, gelösten oder festgespannten Stellung hält, in einer Position ist, in der es entweder in direktem Eingriff mit dem Spannelement (2) steht oder unmittelbar vor diesem angeordnet ist, so daß es durch eine einfache Schwenk- oder Vorschubbewegung mit dem Spannelement (2) in Eingriff bringbar ist.

6. Vorrichtung nach Anspruch 5, dadurch gekennzeichnet, daß das Betätigungselement ortsfest an der Greifereinrichtung (20) angeordnet ist.

7. Vorrichtung nach Anspruch 6, dadurch gekennzeichnet, daß das Betätigungselement ein auf einer geschlossenen Bahn umlaufendes Teil aufweist.

8. Vorrichtung nach Anspruch 7, dadurch gekennzeichnet, daß das Betätigungselement ein Ritzel (12) ist.

9. Vorrichtung nach Anspruch 8, dadurch gekennzeichnet, daß die Drehachse (13) des Ritzels (12) in seiner Eingriffsstellung mit dem Spannelement (2) parallel zur Achse (17) der Spannvorrichtung (30) ist.

10. Vorrichtung nach einem der Ansprüche 5 bis 9, dadurch gekennzeichnet, daß die Greifereinrichtung eine Erfassungseinrichtung für die Drehposition des Werkzeuges (40) bezüglich der Schaftachse und/oder der Spannvorrichtung (30) bezüglich ihrer Achse (17) hat.

11. Greifereinrichtung nach Anspruch 10, dadurch gekennzeichnet, daß die Erfassungseinrichtung eine Halbleiterleseeinrichtung ist.

12. Vorrichtung nach Anspruch 10, dadurch gekennzeichnet, daß die Erfassungseinrichtung eine optische Leseeinrichtung ist.

13. Vorrichtung nach einem der Ansprüche 5 bis 12, dadurch gekennzeichnet, daß die Greifereinrichtung (20) Greiferelemente (21) aufweist, welche beim Eingriff in entsprechende Schaftteile (15) das Werkzeug (40) drehfest halten.

14. Vorrichtung nach einem der Ansprüche 5 bis 13, dadurch gekennzeichnet, daß die Greifereinrichtung entlang eines L-förmigen Weges (a, b, c, d) bewegbar ist, wobei die Winkelspitze des "L" der Position an der Spannvorrichtung (30) entspricht, in welcher die Greifereinrichtung (20) das Werkzeug im eingespannten Zustand hält, ein L-Schenkel in axialer Richtung (a, d) der Spannvorrichtung (17) und der andere in radialer Richtung (b, c) weist.
